# EUROPÄISCHE PATENTSCHRIFT

(11) **EP 2 455 251 B1**
(45) Veröffentlichungstag und Bekanntmachung des Hinweises auf die Patenterteilung: **30.03.2016**
(21) Anmeldenummer: 11405334.1
(22) Anmeldetag: 30.09.2011
(51) Int. Cl.: B60L 5/19

(54) **Stromabnehmerwippe**
Current collector rocker
Archet de pantographe

(30) Priorität: 23.11.2010 CH 19602010
(43) Veröffentlichungstag der Anmeldung: 23.05.2012
(73) Patentinhaber: Richard AG, Murgenthal, 4853 Murgenthal (CH)
(72) Erfinder: Käser, Richard, 4932 Lotzwil (CH); Hofer, Dieter, 4853 Riken (CH); Jutzi, Hanspeter, 4853 Riken (CH)
(74) Vertreter: Rüfenacht, Philipp Michael

(56) Entgegenhaltungen:
- DE-A1- 19 914 566
- DE-U1- 9 304 251
- DE-U1- 29 601 731

## Beschreibung

### Technisches Gebiet

Die Erfindung betrifft eine Stromabnehmerwippe mit mindestens zwei parallel angeordneten Schleifleisten und zwei Endhörnern, wobei die Endhörner zwischen den Schleifleisten angebracht sind und seitlich über diese hinausragen, an den äusseren Enden der Endhörner Auflaufhörner angeordnet oder befestigbar sind und die Endhörner mittels einer Stelleinrichtung gegeneinander und parallel zu den Schleifleisten verschiebbar angebracht sind.

### Stand der Technik

Stromabnehmerwippen dienen der Kontaktierung eines Stromabnehmers mit einem stromgebenden Medium (in den meisten Fällen einer als Oberleitung ausgebildeten Fahrleitung) zur Versorgung des den Stromabnehmer tragenden Triebfahrzeugs mit Strom. Typischerweise bestehen solche Wippen aus einer oder mehreren Schleifleisten, die den physischen Schleifkontakt mit der Fahrleitung bilden. Zusätzlich weisen Wippen sogenannte Auflaufhörner auf, die dazu dienen, bei einem seitlichen Abgleiten der Fahrleitung von der Wippe über die Schleifleisten hinaus ein Verhaken von Fahrleitung und Schleifleisten, und der damit einhergehenden Beschädigung an den beiden Teilen, zu verhindern. Wie die Enden der Schleifleisten sind die Auflaufhörner gegen das Triebfahrzeug weggebogen.

International existieren verschiedene Stromübertragungssysteme, die sich insbesondere durch verschiedene Breiten der benötigten Wippen unterscheiden. So beträgt die erforderliche Breite einer Stromabnehmerwippe in Frankreich, Luxemburg, Italien und der Schweiz beispielsweise 1450 mm. In Österreich, Deutschland und Dänemark sowie teilweise auch zusätzlich in Frankreich, Luxemburg, Belgien und Holland ist eine Wippenbreite von 1950 mm erforderlich. Norwegen und Schweden wiederum benötigen 1800 mm. Daher muss ein Triebfahrzeug, welches auf verschiedenen Stromübertragungssystemen operieren will, entweder über mehrere Stromabnehmer in den jeweils notwendigen Breiten verfügen oder mit verstellbaren Stromabnehmerwippen ausgerüstet sein.

Eine solche verstellbare Wippe offenbart z. B. die DE 10 2008 056 542 B4 (Bombardier Transportation GmbH). Zwischen den beiden Schleifleisten ist ein Bügel angebracht, bestehend aus einer horizontalen Führungsstange und zwei an den beiden Enden dieser Führungsstange befestigten Auflaufhörnern. Typischerweise sind die Auflaufhörner gebogen und besitzen an dem Ende, an welchem sie an der Führungsstange befestigt werden, einen rechteckigen oder runden Querschnitt während sie am anderen Ende abgeflacht sind. Die Führungsstange besitzt dieselbe Querschnittsform wie die Auflaufhörner, aber eine etwas kleinere Querschnittsfläche, sodass die Auflaufhörner, welche am Befestigungsende über einen gewissen Bereich hinweg hohl sind, über die Führungsstange gestülpt werden können. Dadurch sind die Auflaufhörner entlang der Führungsstange über ungefähr die Länge dieser Aushöhlung hinweg verschiebbar. Mittels dieser Konstruktion ist es nun nicht mehr notwendig, die Schleifleisten zu verstellen sondern eine Anpassung der Breite des Bügels ermöglicht einen sicheren Betrieb auf verschiedenen Stromübertragungssystemen.

Die Verschiebung der beiden Auflaufhörner geschieht mittels jeweils einer pneumatischen Zylinder-Kolben-Anordnung und einer Rückholfeder pro Auflaufhorn. Dabei ist in der Ausgangsstellung das Auflaufhorn bis zu einem inneren Anschlag über die Führungsstange gestülpt und die Rückholfeder entspannt, wodurch die innere Position definiert ist. Durch die Expansion der Zylinder-Kolben-Anordnung wird das Auflaufhorn entlang der Führungsstange nach aussen bis zu einem äusseren Anschlag geschoben und die Rückholfeder gespannt. Zur Verschiebung in die Gegenrichtung wird die Zylinder-Kolben-Anordnung entspannt und das Auflaufhorn durch die Wirkung der Rückholfeder in die innere Position bewegt.

Die DE 19914566 offenbart eine Stromabnehmerwippe nach dem Oberbegriff des Anspruchs 1.

Die im Stand der Technik vorgeschlagene Konstruktion der Wippe hat verschiedene Nachteile. Einerseits benötigt der Bügel zur Bewegung der Auflaufhörner zwei separate Bauteile, nämlich die Zylinder-Kolben-Anordnung zur Expansion und die Rückholfeder zur Kontraktion, was die Funktionsweise erschwert oder gar beeinträchtigt, da Federn deformationsanfällig sind und sich durch häufigen Gebrauch entspannen. Andererseits hat sich gezeigt, dass die vorgeschlagene Geometrie nicht allen gestellten Anforderungen gerecht wird.

### Darstellung der Erfindung

Aufgabe der Erfindung ist es, eine dem eingangs genannten technischen Gebiet zugehörende Stromabnehmerwippe zu schaffen, welche in ihrer Breite verstellbar ist und bei einem Abgleiten der Oberleitung über die Schleifleisten hinaus ein Verhaken der Oberleitung mit den Schleifleisten zuverlässig verunmöglicht.

Die Lösung der Aufgabe ist durch die Merkmale des Anspruchs 1 definiert. Gemäss der Erfindung sind die beiden Endhörner jeweils mittels zwei Paaren von Hebeln an der Wippe gelenkig befestigt.

Durch die gegeneinander verschiebbar angeordneten Endhörner, an welchen die Auflaufhörner befestigt werden können, kann die Breite der Wippe den Anforderungen entsprechend durch Betätigung der Stelleinrichtung angepasst werden, ohne dass die Schleifleisten selber verlängerbar bzw. verkürzbar sein müssen. Dies ermöglicht eine sehr robuste und störungsunanfällige Konstruktion der Wippe, was wiederum einen optimalen Einsatz erlaubt, welcher im wirtschaftlichen Interesse des Betreibers steht.

Die Befestigung der Endhörner mittels Hebelpaaren hat eine sehr leichte, aber dennoch stabile Konstruktion zur Folge, was für einen optimalen Einsatz unabdingbar ist. Zudem existiert keine Möglichkeit der gegenseitigen Blockierung der Bauteile (wie z. B. einer Verkantung zwischen Auflaufhörnern und Führungsstange), was wiederum für einen störungsfreien Betrieb notwendig ist.

Des Weiteren erlaubt die Konstruktion mit den Hebelpaaren nicht nur eine gegenseitige lineare Verschiebung, sondern auch eine gleichzeitige Anpassung der Geometrie der Wippe, insbesondere der relativen Position der Endhörner gegenüber den Schleifleisten, wobei letzteres deutlich zu einer schnellen und störungsfreien Rückführung einer abgeglittenen Oberleitung und damit optimalen Funktionsweise der Wippe beiträgt.

Die bevorzugte Konstruktion der beiden Endhörner im Wesentlichen jeweils in Form eines gebogenen Y mit oberen Armen und einem unteren Balken, wobei die oberen Arme parallele Verlängerungen besitzen und die Endhörner derart graduell abgebogen sind, sodass der untere Balken ungefähr rechtwinklig auf die oberen Arme steht, und dass zudem die Verlängerungen der oberen Arme parallel zu den Schleifleisten angebracht sind und die Auflaufhörner an den unteren Balken befestigt werden können, ist eine einfache aber robuste Ausführungsform dieses Bauteils. Die Form der Endhörner sowie die parallel zu den Schleifleisten angebrachten Verlängerungen der oberen Arme erlauben auch in der ausgefahrenen Position ein ungehemmtes Rückgleiten der Oberleitung von den Auflaufhörnern über die Endhörner auf die Schleifleisten. Zudem wirken von der Fahrleitung auf die Endhörner ausgeübte Kräfte nie rechtwinklig, was deren Effekt deutlich reduziert. Durch die graduell ausgeführte Biegung der Endhörner gleitet die Oberleitung zudem gleichmässig zurück, was im Sinne eines optimalen Betriebs ist - ein sprunghaftes Rückgleiten kann zur Distanzierung der Oberleitung von der Wippe und damit zu einem Lichtbogen führen, was sich negativ auf die Stromzufuhr auswirkt und zu Beschädigungen an Fahrleitung und Wippe führen kann.

In einer alternativen Ausführung sind die Endhörner in Form eines T gefertigt, mit wiederum parallel zum unteren Balken an den Enden des oberen Querbalkens befestigten Verlängerungen, die ebenfalls parallel zu den Schleifleisten angebracht sind. Diese Form ist ebenfalls sehr leicht, aber deutlich weniger robust, da durch die Fahrleitung ausgeübte, rechtwinklig auf den unteren Balken des T stehende Kräfte zu einer Verkantung der Endhörner gegenüber den Schleifleisten führen können.

Eine weitere, alternative Ausführungsform sieht keine graduelle Biegung der Endhörner sondern ein sich über einen kleinen Bereich erstreckendes Abknicken der unteren Balken vor. Dadurch stehen die Endhörner wiederum senkrecht auf die Schleifleisten, aber das Rückgleiten geschieht nicht mehr graduell, was zu einem Abspringen der Oberleitung von der Wippe und den dadurch entstehenden, oben genannten Problemen führen kann.

Die Lagerung der Endhörner ist bevorzugt so, dass diese in zwei Positionen fixierbar sind, nämlich einer eingefahrenen und einer ausgefahrenen, was einen stabilen Einsatz der Wippe mit den Endhörnern in diesen beiden Positionen und damit der Wippe in zwei verschiedenen Breiten ermöglicht.

In einer alternativen Ausführung sind die Endhörner in drei oder mehreren Positionen fixierbar.

In der bevorzugten Bauweise sind die Hebel derart geformt und angebracht, dass die äusseren Enden der Endhörner in der ausgefahrenen Position gegenüber der eingefahrenen Position abgesenkt sind. Dies hat einen mehr oder weniger knickfreien Übergang zwischen den Endhörnern und den nach aussen leicht gebogenen Schleifleisten zur Folge, was ein graduelles Rückgleiten der Oberleitung ermöglicht. Ein solches ist wichtig, weil ein im Gegensatz dazu sprunghaftes Rückgleiten verschiedene, oben genannte Probleme im Betrieb der Wippe erzeugen kann. Zudem erlaubt diese Bauweise eine flexible Anpassung der Geometrie der Wippe an die Anforderungen unterschiedlicher Stromübertragungssysteme. Die bevorzugte Konstruktion mittels entsprechend geformten Hebeln stellt die technisch einfachste und damit wirtschaftlichste Lösung zur Erreichung des beschriebenen Effektes dar.

Alternativ dazu kann ein Absenken der Endhörner auch durch den Einsatz einer weiteren Konstruktion, wie beispielsweise einem Pneumatikzylinder, welcher die Lager der Hebel absenkt, erreicht werden.

In einer wiederum alternativen Ausführung erfolgt die Änderung der Wippengeometrie ohne ein Absenken der Endhörner.

Bevorzugt umfasst die Stelleinrichtung der Endhörner einen Aktuator, der eine gegenseitige Verschiebung der Endhörner auslöst. Diese gegenseitige Verschiebung stabilisiert die Endhörner und bietet zudem eine möglichst einfache Bauweise mit einem Minimum an Bauteilen und geringem Gewicht.

In einer alternativen Ausführung besitzt die Stelleinrichtung einen Aktuator pro Endhorn, was die Endhörner separat und unabhängig von einander bewegbar macht. Dies erfordert aber eine robustere Lagerung und Führung der Endhörner, um die ganze Konstruktion der Wippe stabil zu halten.

In der bevorzugten Ausführung umfasst der Aktuator einen oder mehrere Hydraulik- oder Pneumatikzylinder. Dies ermöglicht eine Konstruktion mit möglichst wenigen Bauteilen, die zudem zuverlässig, unterhaltsarm und sehr störungsunanfällig im Betrieb ist.

Alternativ kann der Aktuator z. B. aus einer Feder bestehen, die eingespannt ist und mittels Auslösemechanismus entspannt wird, wodurch z. B. aus der inneren die äussere Position erreicht werden kann. Dies erfordert aber eine kompliziertere Konstruktion des Aktuators und macht ihn dadurch störungsanfällig. Zudem erliegen Federn gerne einer durch steten Gebrauch erzeugten Deformation, was ihre Funktionsweise einschränkt.

Bevorzugt kann aus jeder der beiden Positionen die jeweils andere der beiden Positionen durch eine entsprechende Bewegung des Aktuators erreicht werden. Dadurch wird wiederum eine Konstruktion mit einer möglichst kleinen Anzahl von Bauteilen erreicht, was das Gewicht der Wippe minimiert und im wirtschaftlichen Interesse des Betreibers liegt.

In einer alternativen Ausführung kann z. B. der Aktuator zur Erreichung der einen Position aus der anderen heraus dienen, während ein weiterer Mechanismus für die Gegenbewegung notwendig ist. Zur Implementation eines solchen Bewegungsablaufs werden aber deutlich mehr Bauteile benötigt.

In der bevorzugten Ausführung werden die Endhörner in den beiden Positionen mittels Fixierung des Aktuators fixiert, was eine leichte Bauweise mit möglichst wenigen Bauteilen erlaubt und daher wirtschaftlich ist.

Alternativ können die Endhörner in den beiden Positionen direkt, z. B. mittels jeweils eines zusätzlichen Elements fixiert werden, das durch eine weitere Konstruktion bewegbar ist und in den beiden Positionen der Endhörner mit diesen zusammenwirkt, wodurch eine Bewegung der Endhörner in diesen beiden Positionen verunmöglicht wird. Zur Bewegung dieser Elemente wird eine weitere Konstruktion benötigt.

Bevorzugt ist der Aktuator zwischen zwei an den Endhörnern angebrachten und rechtwinklig zu sowie in der Ebene der Schleifleisten liegenden Stangen befestigt, wobei die Stangen die Befestigungen der gebogenen Hebel an den Endhörnern verbinden. Durch diese Konstruktion wirkt der Aktuator über diese Stangen direkt auf die Endhörner, was die Bauweise der Stelleinrichtung so einfach und mit so wenigen Bauteilen wie möglich gestaltet.

In einer alternativen Ausführung ist der Aktuator an der Tragkonstruktion befestigt und wirkt via eine Hebelkonstruktion auf die Stelleinrichtung, welche wiederum auf die Stangen zwischen den Endhörnern wirkt.

Alternativ dazu verbinden die Stangen nicht die Befestigungen der Hebel an den Endhörnern, sondern sind distanziert davon angebracht.

Bevorzugt ist jedem der Endhörner ein Sensor zugeordnet, mit welchem die Position des jeweiligen Endhorns festgestellt werden kann. Dadurch kann jederzeit die Position der Endhörner gemessen und ihre korrekte Funktionsweise überprüft werden.

Alternativ können solche Sensoren auch weggelassen werden, wodurch aber weder eine Funktionskontrolle der Endhörner noch eine allfällige Korrektur möglich sind und daher eine Fehlfunktion oder Blockade der Endhörner möglicherweise erst zu spät, d. h. nach dem Auftreten eines Schadens, entdeckt wird.

In der bevorzugten Ausführung dienen die äusseren Enden der Endhörner direkt als Auflaufhörner, wodurch die Konstruktion der Wippe durch die Minimierung der Anzahl Bauteile vereinfacht wird. Zudem ist der an den Auflaufhörnern auftretende Verschleiss ungefähr gleich demjenigen an den Endhörnern, was ein separates Ersetzen der Auflaufhörner und daher eine Aufspaltung in zwei oder mehrere Bauteile unnötig macht.

Alternativ werden als separate Bauteile ausgeformte Auflaufhörner an den äusseren Enden der Endhörner angebracht.

Bevorzugt bestehen die Hebelpaare aus jeweils einem geraden und einem gebogenen Hebel, wobei sich die geraden Hebel auf einer ersten Seite und die gebogenen Hebel auf einer zweiten, der ersten Seite gegenüberliegenden Seite einer Tragkonstruktion der Endhörner befinden, was den gebogenen Hebeln erlaubt, eines ihrer Enden auf die andere, erste Seite der Tragkonstruktion zu bewegen, ohne auf letztere zu drücken. Durch eine Platzierung der Hebel auf verschiedenen, gegenüberliegenden Seiten der Tragkonstruktion können diese die an ihnen befestigten Endhörner über einen grossen Bereich hinweg verschieben. Insbesondere erlaubt diese Bauweise eine Platzierung der Tragkonstruktion unterhalb der Endhörner unter Beibehaltung eines grossen Schwenkwinkels der Hebel auf beiden Seiten der Tragkonstruktion.

In einer alternativen Ausführung sind alle Hebel gerade, was aber eine andere Anordnung der Lager der Hebel erfordert oder aber die Bewegungsfreiheit der Hebel stark begrenzt. Eine andere Anordnung der Lager sieht diese z. B. auf derselben Seite der Tragkonstruktion vor, wodurch die Breite der Wippe aber vergrössert wird, ohne einen Vorteil zu bringen.

In der bevorzugten Ausführung liegen die Befestigungspunkte der Hebel eines Paares an den Endhörnern weiter auseinander als die Befestigungspunkte der Hebel desselben Paares an der Wippe. Hiermit wird erreicht, dass sich die Endhörner bei der durch die Hebel geführten Bewegung nicht parallel zur Ausgangsposition verschieben, was die Rückverschiebung einer abgeglittenen Oberleitung begünstigt. Bei unterhalb der Endhörner angebrachten Hebeln ergibt sich beispielsweise ein Absenken der Endhörner.

In einer alternativen Ausführung liegen die Befestigungspunkte der Hebel an der Wippe im selben Abstand wie diejenigen an den Endhörnern, wodurch sich die Endhörner parallel bewegen lassen. Es hat sich aber gezeigt, dass eine Parallelverschiebung der Endhörner und damit der Auflaufhörner alleine oft keine vollständige Anpassung an die verschiedenen schienensystemabhängigen Standards ermöglicht.

In der bevorzugten Ausführungsform sind die Schleifleisten derart ausgebildet, dass sie auf mindestens zwei Stromübertragungssystemen eingesetzt werden können. Eine dementsprechende Bauweise macht das Anbringen von weiteren Stromabnehmern in anderen Breiten unnötig und erlaubt eine relativ schnelle Umstellung beim Wechsel von einem Stromübertragungssystem auf das andere, was Wartezeiten des die Wippe tragenden Triebfahrzeuges minimiert und daher im wirtschaftlichen Interesse des Betreibers liegt.

Alternativ besitzt die Wippe mehrere Paare von Schleifleisten in unterschiedlichen Grössen, die angehoben und abgesenkt werden können, sodass das für den Betrieb im jeweiligen Stromübertragungssystem notwendige Paar ausgewählt und eingesetzt werden kann. Dies bedingt aber eine konstruktiv kompliziertere Bauweise, die verschiedene Hebe- und Absenkmechanismen enthält, was das Gewicht der Wippe erhöht.

Bevorzugt wird die Wippe als Teil eines Stromabnehmers gebaut, welcher der Versorgung eines Schienenfahrzeuges mit Strom dient. Damit kann einerseits eine auf den optimalen Betrieb der Wippe ausgerichtete Konstruktion des Stromabnehmers erreicht und andererseits durch die Funktionalität der Wippe ein optimaler Einsatz des Stromabnehmers und damit Betrieb des Schienenfahrzeugs gewährleistet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine erfindungsgemässe Wippe mit den Endhörnern in der inneren Position;
- Fig. 2: die Wippe mit den Endhörnern in der äusseren Position; und
- Fig. 3: ein Stromabnehmer mit einer erfindungsgemässen Wippe.

Grundsätzlich sind in den Figuren gleiche Teile mit gleichen Bezugszeichen versehen.

### Wege zur Ausführung der Erfindung

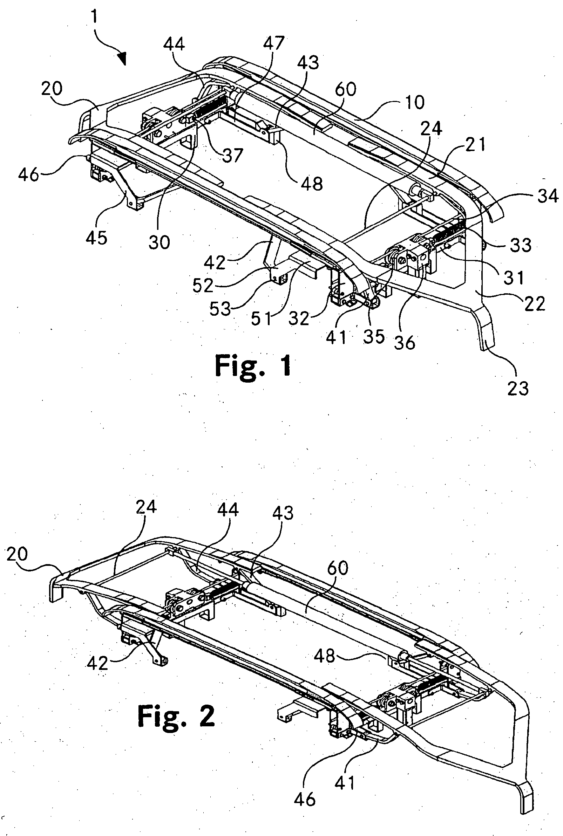

Die Figur 1 zeigt eine Wippe 1 mit zwei parallel angeordneten, an den Enden jeweils nach unten gebogenen, auf einem entsprechenden Träger befestigten Schleifleisten 10 und dazwischen angebrachten Endhörnern 20, die alle an zwei Tragkonstruktionen 30 befestigt sind und von ihr zusammengehalten werden. Eine solche Tragkonstruktion 30 besteht aus jeweils einer unterhalb und rechtwinklig zu den Schleifleisten 10 angebrachten, horizontalen Leiste 31, an deren beiden Enden jeweils ein Paar vertikale Platten 32 mit den an ihnen fixierten Schleifleisten 10 befestigt ist. Damit definieren die beiden Tragkonstruktionen 30 zusammen mit den beiden Schleifleisten 10 einen Wippenrahmen. Mittels Schenkelfeder 34, deren einer Schenkel über einer Umlenkrolle 35 liegt und ein anderer Schenkel von unten gegen eine zwischen den beiden vertikalen Platten 32 befestigte Rolle drückt, sowie einer Feder 33, welche zwischen den beiden vertikalen Platten 32 und einem Federlager 37 eingespannt ist, ist die Tragkonstruktion 30 sowohl horizontal wie auch vertikal federnd mit einem Übergangsstück 36 verbunden, welches die Verbindung zu einer allenfalls angebrachten Stromabnehmerschere bildet.

An der Tragkonstruktion 30 sind die beiden Endhörner mittels jeweils zwei Paaren von Hebeln 41, 42, 43, 44 angebracht, wobei die ausserhalb des Wippenrahmens liegenden Hebel 41, 44 gebogen und die innerhalb des Wippenrahmens liegenden Hebel 42, 43 gerade ausgeformt sind und jeweils die beiden relativ zueinander parallel zur Schleifleiste 10 angeordneten und mit demselben Endhorn zusammenwirkenden Hebel 41, 42 bzw. 43, 44 ein Paar bilden. Die innerhalb des Wippenrahmens angelenkten, kantig S-förmig ausgebildeten Hebel 42 sind an Winkeleisen 45 beweglich gelagert, welche jeweils auf der dem näheren Ende der Schleifleisten 10 abgewandten Seite neben dem Paar vertikaler Platten 32 von unten an den Schleifleisten 10 befestigt sind. Diese Winkeleisen 45 bestehen aus einer an der Schleifleiste 10 angebrachten horizontalen Platte 51, einer seitlich daran und rechtwinklig dazu befestigten, schräg vom näheren Ende der Schleifleiste 10 wegweisenden Leiste 52 sowie einem am anderen Ende dieser Leiste 52 parallel zur Platte 51 angebrachten, das Lager des Hebels 43 bildenden, U-förmigen, nach oben offenen Winkeleisen 53. Durch diese Form der Winkeleisen 45 und der Hebel 42 ist eine Lagerung der Hebel 42 unterhalb der Schleifleisten 10 möglich, während das andere Ende der Hebel 42 an den innerhalb neben den Schleifleisten 10 liegenden Verlängerungen 21 befestigt ist. Die gebogenen, äusseren Hebel 41, 44 sind schwenkbar an kurzen, U-förmigen, nach oben offenen Winkeleisen 46, welche horizontal und rechtwinklig an der Aussenseite der horizontalen Leiste 31 der Tragkonstruktion 30 (und damit der Aussenseite des Wippenrahmens) fixiert sind, befestigt. An den Enden von ebenfalls U-förmigen, nach oben offenen Winkeleisen 47, welche horizontal und rechtwinklig an der Innenseite der horizontalen Leiste 31 der Tragkonstruktion 30 (und damit der Innenseite des Wippenrahmens) befestigt sind, ist jeweils ein Endstück 48 angebracht, das sowohl als Lager des Hebels 43 dient als auch dessen Auslenkung begrenzt. Letzteres wird dadurch erreicht, dass die Oberseite des Endstücks 48 zwei schräg nach unten sowie zueinander und auf die Schwenkachse der Hebellagerung zu verlaufende Flächen aufweist, welche Anschläge für die Maximalpositionen bilden, in welchen der Hebelarm an jeweils einer der Flächen des Endstücks 48 anliegt.

Die Endhörner 20 bestehen aus einem Y-förmigen Mittelteil 22 mit oberen Armen und unterem Balken 23, an dessen oberen Armen jeweils eine ins Innere des Wippenrahmens reichende Verlängerung 21 parallel zu den Schleifleisten angebracht ist. Sowohl das Mittelteil 22 wie auch der untere Balken 23 sind jeweils so graduell nach unten gebogen, dass das untere Ende der Endhörner 20 ungefähr rechtwinklig zu den Verlängerungen 21 steht. Jeweils zwei Paare von Hebeln 41, 42, 43, 44, welche an den Verlängerungen 21 schwenkbar gelagert sind, befestigen die Endhörner beweglich an der Tragkonstruktion 30, sodass die Verlängerungen 21 auf ungefähr derselben Höhe wie die Schleifleisten 10 sind. Dadurch bildet jeweils ein Hebelpaar zusammen mit den ihm als untere Befestigung dienenden Winkeleisen und dem zwischen den beiden oberen Lager der Hebel liegenden Abschnitt der Verlängerung 21 ein Gelenkviereck. Pro Endhorn 20 werden die beiden äusseren Hebel 41, 44 von einer horizontal zwischen den beiden Verlängerungen 21 parallel zur Tragkonstruktion 30 angebrachten Stange 24 gehalten, welche am Übergang zwischen den Verlängerungen 21 und dem Mittelteil 22 fixiert ist. Zwischen diesen beiden Stangen 24 ist ein pneumatischer Zylinder 60 eingespannt, mithilfe dessen die Endhörner 20 aus der dargestellten inneren Position in die äussere Position (dargestellt in Figur 2) bewegt werden können.

Die Figur 2 zeigt die in Figur 1 beschriebene Wippe 1 in der äusseren Position. Diese Position wird durch die Expansion des Zylinders 60 erreicht, welcher auf die beiden Stangen 24 wirkt und die Endhörner 20 auseinander bewegt. Durch die Lagerung der Endhörner 20 mittels Hebel 41, 42, 43, 44 werden erstere in der äusseren Position gegenüber der inneren Position abgesenkt. Dabei klappen die beiden gebogenen Hebel 41 und 44 um, bis sie die Verlängerung der ihnen als Lager dienenden Winkeleisen 46 bilden. Die Hebel 42, 43 werden ebenfalls umgelegt, wobei die maximale Position der Endhörner 20 durch die Auflage des Hebels 43 an der dafür vorgesehenen Fläche des Endstücks 48 definiert ist.

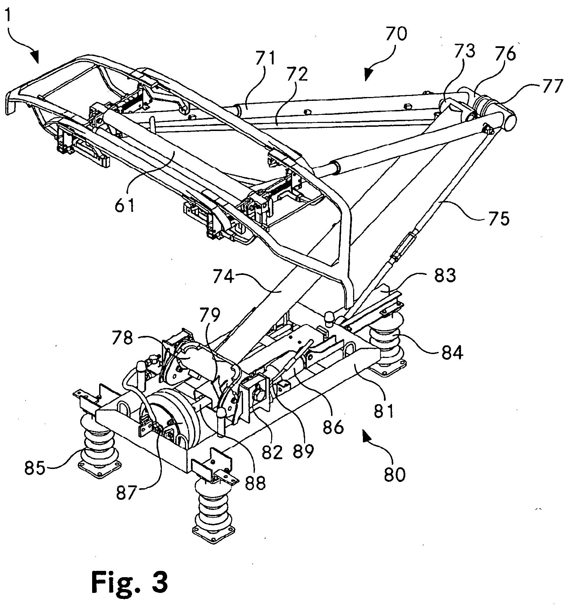

Die Figur 3 stellt eine Gesamtansicht des Stromabnehmers dar, die aufzeigt, wie die Wippe 1 an der Schere 70 eines an sich bekannten Stromabnehmers und diese wiederum am Grundgestell 80 fixiert ist. Die Wippe 1 wird durch eine Verbindungsstange 61 getragen, die an den beiden Oberarmen 71 der Schere 70 fixiert ist, sodass sie mit einer Querstange 76 ein Trapez bildet. Das Lager 73 der beiden Oberarme 71 befindet sich etwas zur Wippe hin verschoben zwischen den beiden Oberarmen 71, sodass durch die Befestigung einer Kuppelstange 75 an einer an der Querstange 76 angebrachten, von der Wippe 1 weggerichteten Verlängerung 77 sowie der Wippenführung 72 die Wippe beim Anheben und Senken nicht aus ihrer Position ausgelenkt wird.

Diese Wippenführung 72 ist an ihrem oberen Ende der Tragkonstruktion 30 der Wippe 1 und am unteren Ende direkt unterhalb des Lagers 73 am Unterarm 74 fixiert, sodass sie zusammen mit dem Oberarm 71, der Tragkonstruktion 30 und dem Abschnitt des Unterarms zwischen Lager 73 und Fixierungspunkt der Wippenführung 72 ein Gelenkviereck bildet. Das Lager 73 wird vom Unterarm 74 getragen, der seinerseits durch das Lager 78 am Grundgestell 80 in einem Sektorbereich drehbar gelagert ist. Die Kuppelstange 75 ist an ihrem oberen Ende an der Verlängerung 77 der Querstange 76 angebracht und an ihrem unteren Ende zwischen den beiden fingerförmigen, in der Ebene des Grundgestells 80 und unterhalb des Unterarms 74 befestigten Verlängerungsschienen 83 des Grundgestells 80 drehbar fixiert.

Aufgebaut ist das Grundgestell 80 aus einem Grundrahmen 81, auf dessen Längsseiten jeweils eine nach oben gerichtete Halterung 82 für die Achse des unteren Lagers 78 des Unterarms 74 angebracht ist, sowie den erwähnten, an der Aussenseite des Rahmens 81 angebrachten Verlängerungsschienen 83. Am Ende dieser beiden Verlängerungsschienen 83 ist auf der der Schere 70 abgewandten Seite ein Isolator 84 zur Befestigung des Stromabnehmers auf dem Fahrzeugdach angebracht; zwei weitere Isolatoren 85 sind am anderen Ende des Grundgestells 80, auf beiden Aussenseiten des Grundrahmens 81 und in dieselbe Richtung wie der erste Isolator 84 weisend befestigt. Ein Anheben der Wippe 1 wird wie folgt bewerkstelligt: Durch die Expansion eines Balgzylinders 87, der via einer horizontalen Verbindungsstange 88 und einem Drahtseil 89 mit dem Lager 78 des Unterarms 74 verbunden ist, wird dieser Unterarm 74 aufgerichtet. Die Kuppelstange 75 sorgt dabei für ein gleichmässiges Aufrichten der Oberarme 71, welche die Wippe 1 anheben. Letztere wiederum behält durch die Fixierung mittels Wippenführung 72 ihre Ausrichtung bei. Bei einem Absenken der Wippe 1 mittels Kontraktion des Balgzylinders 87 sorgt ein Dämpfer 86 für eine abgebremste Bewegung.

Details der Geometrie der Endhörner können abgeändert werden, so kann z. B. die Grundform der Endhörner U-förmig gewählt werden.

Anstatt nur einem können z. B. mehrere, parallel angebrachte Zylinder zur gegenseitigen Verschiebung der Endhörner verwendet werden.

Die Sensoren zur Feststellung der Position der Endhörner können z. B. am unteren Lager der gebogenen Hebel angebracht werden.

Obwohl die Einholmbauweise in zunehmendem Masse die handelsübliche Konstruktion der Schere darstellt, könnte letztere z. B. auch als Pantograph ausgebildet sein.

Zusammenfassend ist festzustellen, dass durch die Erfindung eine Stromabnehmerwippe geschaffen wird, die in ihrer Breite verstellbar ist und bei einem Abgleiten der Oberleitung über die Schleifleisten hinaus ein Verhaken der Oberleitung mit den Schleifleisten verunmöglicht.

## Patentansprüche

1. Stromabnehmerwippe (1) mit mindestens zwei parallel angeordneten Schleifleisten (10) und zwei Endhörnern (20), wobei
a) die Endhörner (20) zwischen den Schleifleisten (10) angebracht sind und seitlich über diese hinausragen,
b) an den äusseren Enden der Endhörner (20) Auflaufhörner angeordnet oder befestigbar sind,
c) die Endhörner (20) mittels einer Stelleinrichtung gegeneinander und parallel zu den Schleifleisten (10) verschiebbar angebracht sind,
**dadurch gekennzeichnet, dass**
d) die beiden Endhörner (20) jeweils mittels zwei Paaren von Hebeln (41, 42, 43, 44) an der Wippe (1) gelenkig befestigt sind.

2. Wippe nach Anspruch 1, **dadurch gekennzeichnet, dass** die beiden Endhörner (20) im Wesentlichen jeweils die Form eines gebogenen Y mit oberen Armen und einem unteren Balken (23) haben, wobei die oberen Arme parallele Verlängerungen (21) besitzen und die Endhörner (20) derart graduell abgebogen sind, sodass der untere Balken (23) ungefähr rechtwinklig auf die oberen Arme steht, und dass zudem die Verlängerungen (21) der oberen Arme parallel zu den Schleifleisten (10) angebracht sind und die Auflaufhörner an den unteren Balken (23) befestigt werden können.

3. Wippe nach Anspruch 1 oder 2, **dadurch gekennzeichnet, dass** die Endhörner (20) in zwei Positionen fixierbar sind, nämlich einer eingefahrenen und einer ausgefahrenen.

4. Wippe nach Anspruch 3, **dadurch gekennzeichnet, dass** die Hebel (41, 42, 43, 44) derart geformt und angebracht sind, dass äussere Enden der Endhörner (20) in der ausgefahrenen Position gegenüber der eingefahrenen Position abgesenkt sind.

5. Wippe nach einem der Ansprüche 1 bis 4, **dadurch gekennzeichnet, dass** die Stelleinrichtung der Endhörner (20) einen Aktuator umfasst.

6. Wippe nach Anspruch 5, **dadurch gekennzeichnet, dass** der Aktuator einen oder mehrere Hydraulik- oder Pneumatikzylinder (60) umfasst.

7. Wippe nach einem der Ansprüche 3 oder 4 und einem der Ansprüche 5 oder 6, **dadurch gekennzeichnet, dass** aus jeder der beiden Positionen die jeweils andere der beiden Positionen durch eine entsprechende Bewegung des Aktuators erreicht werden kann.

8. Wippe nach jeweils einem der Ansprüche 3 oder 4 und 5 oder 6, **dadurch gekennzeichnet, dass** die Endhörner (20) in den beiden Positionen mittels Fixierung des Aktuators fixiert werden.

9. Wippe nach einem der Ansprüche 5 bis 8, **dadurch gekennzeichnet, dass** der Aktuator zwischen zwei an den Endhörnern (20) angebrachten und rechtwinklig zu sowie im Wesentlichen in der Ebene der Schleifleisten (10) liegenden Stangen (24) befestigt ist.

10. Wippe nach einem der Ansprüche 1 bis 9, **dadurch gekennzeichnet, dass** jedem der Endhörner (20) einen Sensor zugeordnet ist, mit welchem die Position des jeweiligen Endhorns (20) festgestellt werden kann.

11. Wippe nach einem der Ansprüche 1 bis 10, **dadurch gekennzeichnet, dass** die äusseren Enden der Endhörner (20) direkt als Auflaufhörner dienen.

12. Wippe nach einem der Ansprüche 1 bis 11, **dadurch gekennzeichnet, dass** die Hebelpaare (41, 42, 43, 44) aus jeweils einem geraden und einem gebogenen Hebel bestehen, wobei sich die geraden Hebel (42, 43) auf einer ersten Seite und die gebogenen Hebel (41, 44) auf einer zweiten, der ersten Seite gegenüberliegenden Seite einer Tragkonstruktion (30) der Endhörner (20) befinden, was den gebogenen Hebeln (41, 44) erlaubt, eines ihrer Enden auf die andere, erste Seite der Tragkonstruktion (30) zu bewegen ohne auf letztere zu drücken.

13. Wippe nach einem der Ansprüche 1 bis 12, **dadurch gekennzeichnet, dass** die Befestigungspunkte der Hebel eines Paares an den Endhörnern (20) weiter auseinander liegen als die Befestigungspunkte der Hebel desselben Paares an der Wippe (1).

14. Wippe nach einem der Ansprüche 1 bis 13, **dadurch gekennzeichnet, dass** die Schleifleisten (10) derart ausgebildet sind, dass sie auf mindestens zwei Stromübertragungssystemen eingesetzt werden können.

15. Stromabnehmer für ein Schienenfahrzeug mit einer Wippe (1) nach einem der Ansprüche 1 bis 14.

## Claims

1. Pantograph rocker (1) having at least two sliding contact strips (10), which are arranged in parallel, and two end horns (20), wherein
a) the end horns (20) are fitted between the sliding contact strips (10) and project laterally beyond the said sliding contact strips,
b) run-on horns are arranged on or can be fastened to the outer ends of the end horns (20),
c) the end horns (20) are fitted such that they can be displaced in relation to one another and parallel to the sliding contact strips (10) by means of an actuating device,
**characterized in that**
d) the two end horns (20) are each fastened to the rocker (1) in an articulated manner by means of two pairs of levers (41, 42, 43, 44).

2. Rocker according to Claim 1, **characterized in that** the two end horns (20) are each substantially in the form of a bent Y with upper arms and a lower beam (23), wherein the upper arms have parallel extensions (21), and the end horns (20) are gradually bent away in such a way that the lower beam (23) is approximately at right angles to the upper arms, and **in that**, in addition, the extensions (21) of the upper arms are fitted parallel to the sliding contact strips (10) and the run-on horns can be fastened to the lower beam (23).

3. Rocker according to Claim 1 or 2, **characterized in that** the end horns (20) can be fixed in two positions, specifically in a retracted position and an extended position.

4. Rocker according to Claim 3, **characterized in that** the levers (41, 42, 43, 44) are formed and fitted in such a way that, in the extended position, outer ends of the end horns (20) are lowered in comparison to the retracted position.

5. Rocker according to one of Claims 1 to 4, **characterized in that** the actuating device of the end horns (20) comprises an actuator.

6. Rocker according to Claim 5, **characterized in that** the actuator comprises one or more hydraulic or pneumatic cylinders (60).

7. Rocker according to either of Claims 3 and 4 and either of Claims 5 and 6, **characterized in that**, from each of the two positions, the respectively other of the two positions can be reached by corresponding movement of the actuator.

8. Rocker according to in each case either of Claims 3 and 4 and, respectively, 5 and 6, **characterized in that** the end horns (20) are fixed in the two positions by means of fixing the actuator.

9. Rocker according to one of Claims 5 to 8, **characterized in that** the actuator is fastened between two strands (24) which are fitted to the end horns (20) and are situated at right angles to and substantially in the plane of the sliding contact strips (10).

10. Rocker according to one of Claims 1 to 9, **characterized in that** a sensor is associated with each of the end horns (20), it being possible for the position of the respective end horn (20) to be determined using the said sensor.

11. Rocker according to one of Claims 1 to 10, **characterized in that** the outer ends of the end horns (20) serve directly as run-on horns.

12. Rocker according to one of Claims 1 to 11, **characterized in that** the pairs of levers (41, 42, 43, 44) each comprise one straight and one bent lever, wherein the straight levers (42, 43) are located on a first side and the bent levers (41, 44) are located on a second side of a supporting structure (30) of the end horns (20), which second side is situated opposite the first side, this allowing the bent levers (41, 44) to move one of their ends towards the other, first side of the supporting structure (30), without pressing the said side.

13. Rocker according to one of Claims 1 to 12, **characterized in that** the fastening points of the levers of one pair to the end horns (20) are situated further apart than the fastening points of the levers of the same pair to the rocker (1).

14. Rocker according to one of Claims 1 to 13, **characterized in that** the sliding contact strips (10) are designed in such a way that they can be used on at least two current transmission systems.

15. Pantograph for a rail vehicle, having a rocker (1) according to one of Claims 1 to 14.

## Revendications

1. Archet de pantographe (1) comprenant au moins deux bandes de frottement (10) disposées en parallèle et deux cornes finales (20),
a) les cornes finales (20) étant montées entre les bandes de frottement (10) et faisant saillie latéralement au-dessus de celles-ci,
b) des cornes d'accostage étant disposées ou pouvant être fixées aux extrémités extérieures des cornes finales (20),
c) les cornes finales (20) étant montées coulissantes l'une par rapport à l'autre et parallèlement aux bandes de frottement (10) au moyen d'un dispositif de commande,
**caractérisé en ce que**
d) les deux cornes finales (20) sont fixées articulées à l'archet (1) respectivement au moyen de deux paires de leviers (41, 42, 43, 44).

2. Archet selon la revendication 1, **caractérisé en ce que** les deux cornes finales (20) possèdent pour l'essentiel respectivement la forme d'un Y courbé avec des bras supérieurs et une poutre inférieure (23), les bras supérieurs possédant des prolongateurs (21) parallèles et les cornes finales (20) étant courbées graduellement de telle sorte que la poutre inférieure (23) est approximativement perpendiculaire aux bras supérieurs, et **en ce qu'**en outre les prolongateurs (21) des bras supérieurs sont montés parallèlement aux bandes de frottement (10) et les cornes d'accostage peuvent être fixées à la poutre inférieure (23).

3. Archet selon la revendication 1 ou 2, **caractérisé en ce que** les cornes finales (20) peuvent être immobilisées dans deux positions, à savoir une rentrée et une sortie.

4. Archet selon la revendication 3, **caractérisé en ce que** les leviers (41, 42, 43, 44) sont façonnés et montés de telle sorte que les extrémités extérieures des cornes finales (20) en position sortie sont abaissées par rapport à la position rentrée.

5. Archet selon l'une des revendications 1 à 4, **caractérisé en ce que** le dispositif de commande des cornes finales (20) comprend un actionneur.

6. Archet selon la revendication 5, **caractérisé en ce que** l'actionneur comprend un ou plusieurs vérins (60) hydrauliques ou pneumatiques.

7. Archet selon l'une des revendications 3 ou 4 et l'une des revendications 5 ou 6, **caractérisé en ce que** depuis chacune des deux positions, l'autre respective des deux positions peut être atteinte par un mouvement correspondant de l'actionneur.

8. Archet selon respectivement l'une des revendications 3 ou 4 et 5 ou 6, **caractérisé en ce que** les cornes finales (20) sont immobilisées dans les deux positions par immobilisation de l'actionneur.

9. Archet selon l'une des revendications 5 à 8, **caractérisé en ce que** l'actionneur est fixé entre deux tiges (24) montées sur les cornes finales (20) et disposées perpendiculairement ainsi que sensiblement dans le plan des bandes de frottement (10).

10. Archet selon l'une des revendications 1 à 9, **caractérisé en ce qu'**à chacune des cornes finales (20) est associé un capteur à l'aide duquel peut être déterminée la position de la corne finale (20) correspondante.

11. Archet selon l'une des revendications 1 à 10, **caractérisé en ce que** les extrémités extérieures des cornes finales (20) servent directement de cornes d'accostage.

12. Archet selon l'une des revendications 1 à 11, **caractérisé en ce que** les paires de leviers (41, 42, 43, 44) se composent respectivement d'un levier droit et d'un levier coudé, les leviers droits (42, 43) se trouvant sur un premier côté et les leviers coudés (41, 44) sur un deuxième côté d'une structure porteuse (30) des cornes finales (20) opposé au premier côté, ce qui permet aux leviers coudés (41, 44) de déplacer l'une de leurs extrémités de l'autre côté, le premier, de la structure porteuse (30) sans exercer de pression sur cette dernière.

13. Archet selon l'une des revendications 1 à 12, **caractérisé en ce que** les points de fixation des leviers d'une paire sur les cornes finales (20) sont plus espacés que les points de fixation des leviers de la même paire sur l'archet (1).

14. Archet selon l'une des revendications 1 à 13, **caractérisé en ce que** les bandes de frottement (10) sont configurées de telle sorte qu'elles peuvent être utilisées sur au moins deux systèmes de transmission de courant.

15. Pantographe pour un véhicule ferroviaire équipé d'un archet (1) selon l'une des revendications 1 à 14.
